# EUROPEAN PATENT APPLICATION

(11) **EP 3 854 909 A1**
(43) Date of publication of application: **28.07.2021**
(21) Application number: 18934252.0
(22) Date of filing: 21.09.2018
(51) Int. Cl.: C23C 26/00, B29C 45/14, B32B 7/04, B32B 9/00, B32B 15/16, B32B 27/00, H01M 10/613, H01M 10/6554

(54) **METAL/RESIN COMPOSITE STRUCTURE, METHOD FOR MANUFACTURING METAL/RESIN COMPOSITE STRUCTURE, AND COOLING DEVICE**

(71) Applicant: Mitsui Chemicals, Inc., Minato-ku Tokyo 105-7122 (JP)
(72) Inventor: KIMURA Kazuki, Sodegaura-shi, Chiba 299-0265 (JP); TOMITA Yoshihiko, Sodegaura-shi, Chiba 299-0265 (JP); TOMINAGA Takahiro, Sodegaura-shi, Chiba 299-0265 (JP); SHIMAZAKI Junya, Sodegaura-shi, Chiba 299-0265 (JP)
(74) Representative: J A Kemp LLP
(86) International application number: PCT/JP2018/035134
(87) International publication number: WO 2020/059128

(57) **Abstract**

The metal/resin composite structure (106) of the present invention includes a metal member (103), a resin member (105) which is integrated to the metal member (103) and is formed of a resin composition containing a thermoplastic resin, and an inorganic particle layer (107) which is provided between the metal member (103) and the resin member (105) and is formed of inorganic particles. Moreover, the metal member (103) has a fine uneven shape (104) at least on a surface of an integrating part with the resin member (105), the inorganic particle layer (107) is formed to cover a part or an entirety of the fine uneven shape (104) of the metal member (103), and the metal member (103) and the resin member (105) are integrated to each other through the inorganic particle layer (107).

## Description

### TECHNICAL FIELD

The present invention relates to a metal/resin composite structure, a method for manufacturing a metal/resin composite structure, and a cooling device.

### BACKGROUND ART

In a wide range of industrial fields, mainly in the fields of electricity and automobiles, usefulness of composite technology that integrates a metal such as an iron-based metal and an aluminum-based metal with a thermoplastic resin is increasing.

In the related art, it has been common to use an adhesive for integrating such a metal and a thermoplastic resin. However, a method using an adhesive not only increases the number of production steps, but also adhesive strength may decrease with time or integrating strength may not be exhibited at high temperature. Therefore, in particular, it is difficult to apply the method to fields such as automobiles, which require heat resistance. In addition, a mechanical integrating method such as screwing has been widely used, but widespread use thereof has been limited in terms of weight reduction.

As a new method for integrating a metal and a thermoplastic resin, a method for injection molding a thermoplastic resin on a metal member having a roughened surface is known (for example, Patent Document 1).

### RELATED DOCUMENT

### PATENT DOCUMENT

[Patent Document 1] International Publication No. WO 2015/8847
[Patent Document 2] Japanese Unexamined Patent Publication No. 2001-62862
[Patent Document 3] Japanese Unexamined Patent Publication No. 2016-74116

### SUMMARY OF THE INVENTION

### TECHNICAL PROBLEM

In injection molding, generally, a thermoplastic resin is injection-molded after being heated to a temperature at which the thermoplastic resin has sufficient fluidity to fill a mold cavity and melted. In this case, the fluidity of the molten resin is an important factor which not only determines ease of filling the mold cavity, but also is for controlling whether the molten resin penetrates into a surface-roughened portion of an insert metal with sufficient pressure after filling. Viscosity of the molten resin can be mentioned as an index showing the fluidity. In a case of using a high melt viscosity type thermoplastic resin, especially an amorphous engineering plastic promising from a viewpoint of high strength and high heat resistance, the fluidity at the time of melting is inferior. Therefore, devisal was needed when integrating the metal-resin by injection molding (for example, Patent Document 2).

In the related art, it has been considered effective to raise a resin temperature or a mold temperature in order to increase the fluidity of the molten resin. However, a high resin temperature is also disadvantageous in terms of energy. Also, there is a case where resin decomposition due to heat may occur to impair original physical properties of the resin. Various methods have been proposed to overcome such problems, and one of the methods is a heat and cool molding method in which the mold temperature is changed multiple times in one injection molding cycle when injecting the resin. A point of the method is to maintain the mold temperature at the time of resin injection to be equal to or higher than Tg (glass transition point) of the resin. However, the method requires a special mold and a temperature control system having a function of alternately flowing a heat medium and a refrigerant through the mold to repeatedly heat and cool a surface of the mold (for example, Patent Document 3).

The present invention has been made in view of the above circumstances, and is to provide a metal/resin composite structure that stably exhibits high integrating strength even in a case where fluidity at the time of melting is inferior due to high melt viscosity of a thermoplastic resin forming a resin member in the metal/resin composite structure.

### SOLUTION TO PROBLEM

The present inventors have intensively studied to develop a method for increasing an integrating strength between a metal member and a resin member in a metal/resin composite structure more than ever or a composite structure that stably exhibits high integrating strength even in a case of using a thermoplastic resin that has poor fluidity at the time of melting due to high melt viscosity. As a result, the present inventors have found that a method for interposing an inorganic particle layer between a metal member and a resin member is effective, and arrived at the present invention.

According to the present invention, a metal/resin composite structure, a method for manufacturing the metal/resin composite structure, and a cooling device are provided.
[1] A metal/resin composite structure including:
   a metal member;
   a resin member which is integrated to the metal member and is formed of a resin composition containing a thermoplastic resin; and
   an inorganic particle layer which is provided between the metal member and the resin member and is formed of inorganic particles,
   wherein the metal member has a fine uneven shape at least on a surface of an integrating part with the resin member,
   the inorganic particle layer is formed to cover a part or an entirety of the fine uneven shape of the metal member, and
   the metal member and the resin member are integrated to each other through the inorganic particle layer.
[2] The metal/resin composite structure according to [1],
   in which the inorganic particle layer contains silica particles.
[3] The metal/resin composite structure according to [1] or [2],
   in which an average thickness of the inorganic particle layer is equal to or larger than 1 nm and equal to or smaller than 400 nm.
[4] The metal/resin composite structure according to [1] or [2],
   in which an average thickness of the inorganic particle layer is equal to or larger than 2 nm and equal to or smaller than 100 nm.
[5] The metal/resin composite structure according to any one of [1] to [4],
   in which an average particle size of the inorganic particles is equal to or larger than 1 nm and equal to or smaller than 100 nm.
[6] The metal/resin composite structure according to any one of [1] to [5],
   in which an average value of height differences between projection portions and recessed portions of the fine uneven shape is equal to or more than 10 nm and equal to or less than 200 µm.
[7] The metal/resin composite structure according to any one of [1] to [6],
   in which the thermoplastic resin contains an amorphous thermoplastic resin.
[8] The metal/resin composite structure according to any one of [1] to [7],
   in which the metal member contains one or more metals selected from an iron-based metal, an aluminum-based metal, a magnesium-based metal, a copper-based metal, and a titanium-based metal.
[9] A method for manufacturing the metal/resin composite structure according to any one of [1] to [8], the method including:
   a step of preparing a metal member having a fine uneven shape on a surface;
   a step of forming an inorganic particle layer formed of inorganic particles to cover a part or an entirety of the fine uneven shape of the metal member; and
   a step of disposing the metal member on which the inorganic particle layer is formed in a mold and injecting a resin composition containing a thermoplastic resin into the mold to integrate a resin member to the metal member through the inorganic particle layer.
[10] The method for manufacturing the metal/resin composite structure, according to [9],
   in which the inorganic particle layer is formed by using an inorganic particle dispersion liquid.
[11] A cooling device including:
   a cooling fin which is formed of a metal and can contact a heating element;
   a frame member which is made of a resin composition containing a thermoplastic resin and is provided in a part of the cooling fin; and
   a refrigerant conduit which is formed of a metal and is integrated to the frame member,
   in which the resin composition forming the frame member is integrated to an outer peripheral surface of the refrigerant conduit through an inorganic particle layer,
   the outer peripheral surface of the refrigerant conduit has a fine uneven shape at least on a surface of an integrating part with the frame member, and
   the inorganic particle layer is formed to cover a part or an entirety of the fine uneven shape of the refrigerant conduit.
[12] The cooling device according to [11],
   in which the inorganic particle layer contains silica particles.
[13] The cooling device according to [11] or [12],
   in which the heating element includes a battery cell.

### ADVANTAGEOUS EFFECTS OF INVENTION

According to the present invention, it is possible to provide a metal/resin composite structure that stably exhibits high integrating strength even in a case where fluidity at the time of melting is inferior due to high melt viscosity of a thermoplastic resin forming a resin member in the metal/resin composite structure.

### BRIEF DESCRIPTION OF THE DRAWINGS

An object described above, other objects, features, and advantages will be further clarified by preferred embodiments to be described below and the accompanying drawings.
Fig. 1 represents an external view showing an example of a structure of a metal/resin composite structure according to an embodiment of the present invention.
Fig. 2 represents a sectional view conceptually showing an example of a structure of an integrating part of a metal/resin composite structure according to an embodiment of the present invention.
Fig. 3 represents a view showing an SEM image (reflected electron image) of a section of an integrating part of a metal/resin composite structure obtained in Example 1.
Fig. 4 represents a view showing a secondary electron image (element mapping image) of an SEM/EDS image of the section of the integrating part of the metal/resin composite structure obtained in Example 1.
Fig. 5 represents a graph showing an EDS spectrum of an inorganic particle layer in the SEM/EDS image of the section of the integrating part of the metal/resin composite structure obtained in Example 1.
Fig. 6 represents a perspective view showing an example of a cooling device according to an embodiment of the present invention.
Fig. 7 represents a front view showing an example of a cooling device according to an embodiment of the present invention.
Fig. 8 represents an enlarged view of a part A in Fig. 7.
Fig. 9 represents a view showing a disposition of a cooling fin and a refrigerant conduit which are formed of metals and form a cooling device according to an embodiment of the present invention.
Fig. 10 represents a view of a layout of Fig. 9 as viewed from a z direction. That is, Fig. 10 represents image views showing an example of fitting of a refrigerant conduit to a peripheral edge part of a cooling fin (Fig. 10(a) represents an image view before close fitting, and Fig. 10(b) represents an image view after close fitting).

### DESCRIPTION OF EMBODIMENTS

Hereinafter, embodiments of the present invention will be described with reference to the drawings. Note that, in all drawings, similar components are designated by a common reference numeral, and description thereof will not be repeated. Also, the drawings are schematic views and do not match actual dimensional ratios. Note that, unless otherwise specified, expression "to" between the numbers in the sentence represents equal to or more than the number and equal to or less than the other number.

### <Metal/resin composite structure>

A metal/resin composite structure according to the present embodiment will be described.

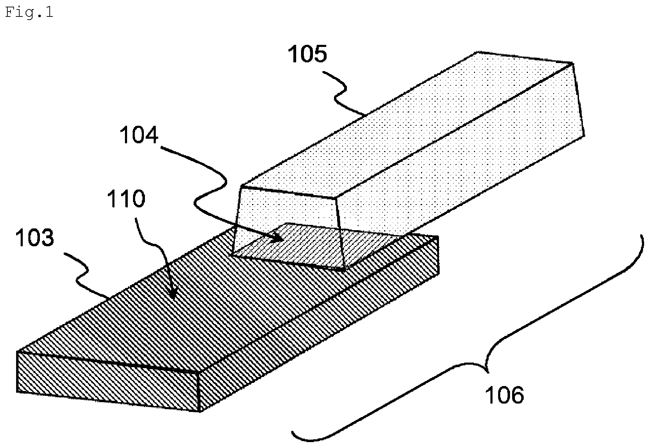

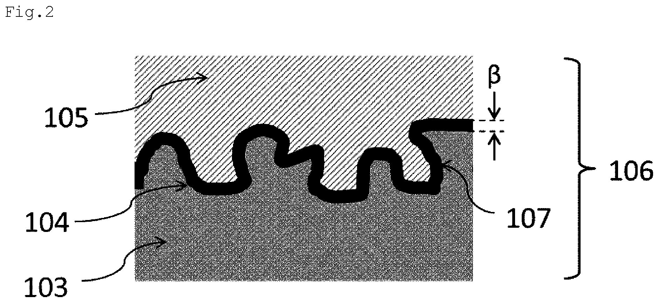

Fig. 1 represents an external view showing an example of a structure of a metal/resin composite structure 106 according to an embodiment of the present invention. Fig. 2 represents a sectional view conceptually showing an example of a structure of an integrating part of the metal/resin composite structure 106 according to an embodiment of the present invention.

As shown in Figs. 1 and 2, the metal/resin composite structure 106 includes a metal member 103, a resin member 105 which is integrated to the metal member 103 and is formed of a resin composition (P) containing a thermoplastic resin, and an inorganic particle layer 107 which is provided between the metal member 103 and the resin member 105 and is formed of inorganic particles. Moreover, the metal member 103 has a fine uneven shape 104 at least on a surface of an integrating part with the resin member 105, the inorganic particle layer 107 is formed to cover a part or an entirety of the fine uneven shape 104 of the metal member 103, and the metal member 103 and the resin member 105 are integrated to each other through the inorganic particle layer 107.

Here, the inorganic particle layer 107 is formed over a formation region of the fine uneven shape 104 with a shape following the fine uneven shape 104. Therefore, it is expected that a three-dimensional shape of a surface of the inorganic particle layer 107 substantially matches a three-dimensional shape of the fine uneven shape 104.

Existence of the inorganic particle layer 107 can be confirmed by an element mapping analysis method for a section of a metal-resin integrating part. Specifically, the inorganic particle layer 107 is detected by cutting out the section of the integrating part by an ion milling method, acquiring a reflected electron image by a scanning electron microscope (SEM), and performing an energy dispersive X-ray analysis (EDS).

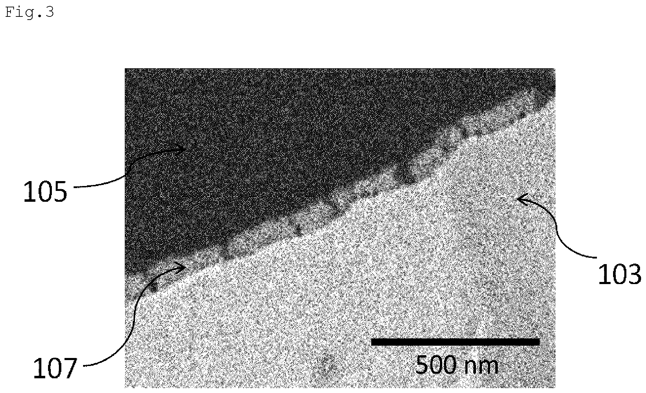

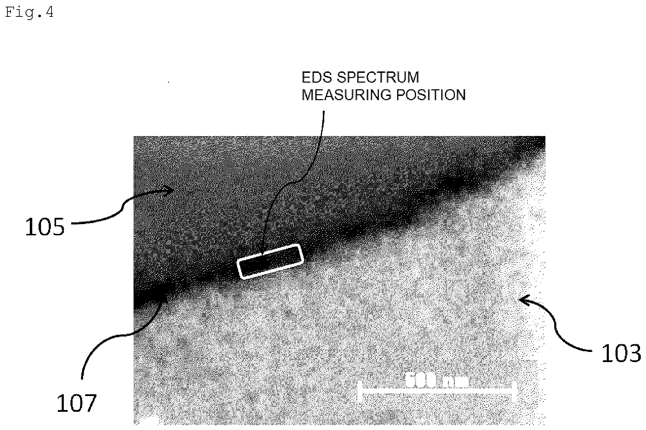

Figs. 3 and 4 represent sectional views around the integrating parts of the metal/resin composite structure 106 according to Example 1 observed by such SEM/EDS analysis. It has been confirmed that the inorganic particle layer 107 exists to follow the fine uneven shape 104 formed on a surface 110 of the metal member 103.

The metal/resin composite structure 106 according to the present embodiment is obtained in a manner that the resin composition (P) forming the resin member 105 penetrates into the fine uneven shape 104 formed on the surface 110 of the metal member 103, and the metal and the resin are integrated to each other to form a metal-resin interface.

It is considered that when the resin composition (P) penetrates into the fine uneven shape 104 on the surface of the integrating part of the metal member 103 with the resin member 105, a physical resistance force (anchor effect) is effectively exhibited between the metal member 103 and the resin member 105 and it becomes possible to firmly integrate the metal member 103, which is normally difficult to integrate, and the resin member 105 made of the resin composition (P).

The metal/resin composite structure 106 thus obtained can also prevent water and moisture from entering the interface between the metal member 103 and the resin member 105. That is, it is also possible to improve airtightness and watertightness at an adhesion interface of the metal/resin composite structure 106.

Hereinafter, each member forming the metal/resin composite structure 106 will be described.

### (Metal member)

The metal member 103 according to the present embodiment is a metal member having at least a fine uneven shape 104 on the surface of the integrating part with the resin member 105. The fine uneven shape 104 can be formed by various roughening methods to be described later. Depending on kinds of the roughening methods, an uneven shape of a region including the fine uneven shape 104 may be configured of a first uneven shape part with a relatively large scale, and a second uneven shape part formed on a surface of the first uneven shape part, with a relatively small scale. The fine uneven shape 104 in the present embodiment is used as a term including an aspect having only the first uneven shape part, an aspect having only a second uneven shape part, and a mode having both the first uneven shape part and the second uneven shape part.

A depth of a recessed portion of the fine uneven shape 104, that is, an average value of height differences between projection portions and recessed portions of the fine uneven shape 104 is not particularly limited, and can be, for example, equal to or more than 10 nm and equal to or less than 200 µm. The average value of the height differences is largely determined by a method for roughening a metal surface. For example, in a chemical solution method to be described later, the average value can be equal to or more than 10 nm and less than 100 µm, and in a laser processing, the average value can be equal to or more than 100 µm and equal to or less than 200 µm. In the present embodiment, the average value of the height differences is the same as a ten-point average roughness (Rzjis) measured in accordance with JIS B0601: 2001.

The fine uneven shape 104 is preferably, for example, a fine uneven shape in which projection portions having an interval period of equal to or more than 5 nm and equal to or less than 500 µm stand close together.

Here, the interval period of the fine uneven shape is an average value of distances from a projection portion to an adjacent projection portion, and can be obtained by using a photograph imaged by an electron microscope or a laser microscope or a surface roughness measuring device.

The interval period measured by the electron microscope or the laser microscope is usually an interval period of less than 500 nm. Specifically, the interval period can be measured by the following procedure. First, the surface of the integrating part of the metal member 103 is imaged. Next, 50 projection portions are randomly selected from the obtained photograph, and distances from the projection portions to the adjacent projection portions are measured respectively. Moreover, the sum of all the distances from the projection portion to the adjacent projection portions is divided by 50 to obtain the interval period. On the other hand, the interval period exceeding 500 nm is the same as an average length (RSm) of a roughness curve element which is determined using a surface roughness measuring device and is measured in accordance with JIS B0601: 2001.

Note that, not only the surface of the integrating part of the metal member 103 but also the entire surface of the metal member 103 are subjected to a surface roughness treatment. Therefore, it is also possible to measure the interval period from a location other than the surface of the integrating part, on the same surface as the surface of the integrating part of the metal member 103.

The interval period is preferably equal to or more than 10 nm and equal to or less than 300 µm, and more preferably equal to or more than 20 nm and equal to or less than 200 µm.

When the interval period is equal to or more than the lower limit value, the resin composition forming the resin member 105 can sufficiently enter the recessed portion of the fine uneven shape, and the integrating strength between the metal member 103 and the resin member 105 can be further improved. In addition, when the interval period is equal to or less than the upper limit value, it is possible to suppress formation of a gap at an integrating portion between the metal member 103 and the resin member 105. As a result, it is possible to suppress penetration of impurities such as water into the gap at the interface between the metal member 103 and the resin member 105. Therefore, it is possible to suppress a decrease in strength when using the metal/resin composite structure 106 at high temperature and high humidity.

The resin composition (P) containing the thermoplastic resin penetrates into the recessed portion of the fine uneven shape 104 through the inorganic particle layer 107. In the present embodiment, it is preferable that the resin composition (P) penetrates into the recessed portion to an area at a depth of 1/2 or more of a depth d of the recessed portion. That is, it is preferable that a penetration depth D of the resin composition (P) into the recessed portion satisfies D ≥ d/2.

The metal member 103 can be obtained, for example, by processing a metal material (M) and then forming the fine uneven shape 104 on the surface. A kind of the metal material (M) is not particularly limited, and examples thereof can include an iron-based metal (such as iron, an iron alloy, a steel material, and stainless steel), an aluminum-based metal (such as aluminum and an aluminum alloy), a magnesium-based metal (such as magnesium and a magnesium alloy), a copper-based metal (such as copper and a copper alloy), and a titanium-based metal (such as titanium and a titanium alloy). These metals may be used alone or two or more kinds thereof may be used in combination. An optimal metal is selected according to applications. For example, in applications where light weight is important, such as a laptop personal computer housing, aluminum-based metals such as alloy No. 1050, 2014, 3003, 5052, 6063, and 7075 specified in JIS H4000, or magnesium-based metals such as AZ91, AZ80, AZ91D, and AS21 are used, and in applications where mechanical properties are important, such as automobiles, rolled mild steels represented by SPCC, SPHC, SAPH, and SPFH and iron-based metals represented by stainless steel are used.

A shape of the metal member 103 is not particularly limited as long as the shape is capable of integrating the metal member to the resin member 105, and examples of the shape can include a flat plate shape, a curved plate shape, a rod shape, a tubular shape, and a lump shape. In addition, the structure may have a shape obtained by combining these shapes.

Also, a shape of the surface of the integrating part to be integrated to the resin member 105 is not particularly limited, and examples thereof include a flat surface and a curved surface.

It is preferable that the metal member 103 is obtained by subjecting a metal material to a roughening treatment, which will be described later, after being processed into a predetermined shape described above by plastic processing by cutting or pressing, punching processing, or thinning processing such as cutting, polishing, and electric discharge machining. In short, it is preferable to use a metal member processed into a required shape by various processing methods.

The fine uneven shape 104 existing at least on the surface of the integrating part of the metal member 103 with the resin member 105 can be formed by a known metal surface roughness method. For example, a chemical treatment method; an anodizing method; and a mechanical cutting method such as sandblasting, knurling, and laser processing can be mentioned. Examples of the chemical treatment method can include a method using an acid-based etching agent (International Publication No. WO 2015/008847, Japanese Unexamined Patent Publication No. 2001-348684, International Publication No. WO 2008/81933, and the like), a method for treating the metal member with one or more amine-based aqueous solutions selected from hydrated hydrazine, ammonia, and a water-soluble amine compound (International Publication No. WO 2009/31632, Japanese Unexamined Patent Publication No. 2005-119005, and the like), a method using a copper surface treatment agent containing an acid, a benzimidazole compound, and water (Japanese patent No. 4242915 and the like), and a method for applying a metal plating layer and treating the layer with an inorganic acid (International Publication No. WO 2016/171128).

### (Inorganic particle layer)

The inorganic particle layer 107 according to the present embodiment is formed of inorganic particles.

The inorganic particles forming the inorganic particle layer 107 according to the present embodiment are not particularly limited, but are nanoparticles having an average particle size of primary particles of preferably equal to or larger than 1 nm and equal to or smaller than 100 nm, more preferably equal to or larger than 1 nm and equal to or smaller than 70 nm, still more preferably equal to or larger than 1 nm and equal to or smaller than 50 nm, even more preferably equal to or larger than 1 nm and equal to or smaller than 30 nm, and particularly preferably larger than 1 nm and smaller than 20 nm, and may have a secondary particle structure in which several to several hundred primary particles are aggregated.

An average particle size of the inorganic particles forming the inorganic particle layer 107 can be measured by, for example, a sectional electron microscope (TEM or SEM) of the integrating part between the metal member 103 and the resin member 105.

When the average particle size of the inorganic particles is equal to or larger than the lower limit value, it is possible to suppress workability deterioration due to the aggregation between the inorganic particles in a dispersion liquid used when forming the inorganic particle layer 107 on the fine uneven shape 104 over the metal member 103.

Also, when the average particle size of the inorganic particles is equal to or smaller than the upper limit value, it is possible to sufficiently exhibit an effect of improving the integrating strength of the present embodiment even in a case where the average height difference between the recessed portions and the projection portions of the fine uneven shape 104 over the metal member 103 is small as nm order.

In addition, it is preferable that the average particle size of the inorganic particles is smaller than the average height difference between the recessed portions and the projection portions of the fine uneven shape 104 over the metal member 103.

The inorganic particle layer 107 is not particularly limited, but is, for example, a layer formed by aggregates (secondary particles) of inorganic particles. An average thickness (B) of the inorganic particle layer 107 is preferably equal to or larger than 1 nm and equal to or smaller than 400 nm, more preferably equal to or larger than 1 nm and equal to or smaller than 300 nm, still more preferably equal to or larger than 1 nm and equal to or smaller than 250 nm, even more preferably equal to or larger than 1 nm and smaller than 200 nm, and particularly preferably equal to or larger than 2 nm and equal to or smaller than 100 nm. As the average thickness (B) of the inorganic particle layer 107, a value obtained by observing a section of integrating part at predetermined 3 points of the metal/resin composite structure 106 using the SEM/EDS and averaging the thickness measured from each of the obtained SEM/EDS image can be adopted.

When the average thickness (B) of the inorganic particle layer 107 is within the above range, the integrating strength of the metal/resin composite structure 106 can be further improved.

In addition, it is preferable that the average thickness (B) of the inorganic particle layer 107 is smaller than the average height difference between the recessed portions and the projection portions of the fine uneven shape 104 over the metal member 103.

The inorganic particles forming the inorganic particle layer 107 according to the present embodiment are not particularly limited. For example, silica particles, tin oxide particles, nanodiamond particles, zirconia particles, niobium oxide particles, iron oxide particles, alumina particles, and carbon nanofibers can be used.

Among these, the silica particles are preferable.

Here, in a case where the inorganic particle layer 107 contains the silica particles, when the entirety of the inorganic particle layer 107 is 100% by mass, the content of the inorganic particles other than the silica particles is, for example, equal to or less than 60% by mass, preferably equal to or less than 50% by mass, more preferably equal to or less than 30% by mass, and particularly preferably equal to or less than 10% by mass.

### (Resin member)

Hereinafter, the resin member 105 according to the present embodiment will be described.

The resin member 105 is formed of the resin composition (P) containing a thermoplastic resin (A). The resin composition (P) contains a thermoplastic resin (A) as a resin component and, as necessary, a filler (B). Furthermore, the resin composition (P) contains other compounding agents, as necessary. Note that, for convenience, even in a case where the resin member 105 is made of only the thermoplastic resin (A), it is described that the resin member 105 is formed of the thermoplastic resin composition (P).

The thermoplastic resin (A) is not particularly limited, and examples thereof include a polyolefin-based resin, a polymethacrylic resin such as a polymethylmethacrylate resin, a polyacrylic resin such as a methyl polyacrylate resin, a polystyrene resin, a polyvinyl alcohol-polyvinyl chloride copolymer resin, a polyvinyl acetal resin, a polyvinyl butyral resin, a polyvinyl formal resin, a polymethylpentene resin, a maleic anhydride-styrene copolymer resin, a polycarbonate resin, aromatic polyetherketones such as a polyetheretherketone resin and a polyetherketone resin, a polyester-based resin, a polyamide-based resin, a polyamide-imide resin, a polyimide resin, a polyetherimide resin, a styrene-based elastomer, a polyolefin-based elastomer, a polyurethane-based elastomer, a polyester-based elastomer, a polyamide-based elastomer, an ionomer, an amino polyacrylamide resin, an isobutylene maleic anhydride copolymer, an acrylonitrile-butadiene-styrene resin (ABS), an ACS, an AES, an AS, an ASA, an MBS, an ethylene-vinyl chloride copolymer, an ethylene-vinyl acetate copolymer, an ethylene-vinyl acetate-vinyl chloride graft polymer, an ethylene-vinyl alcohol copolymer, a chlorinated polyvinyl chloride resin, a chlorinated polyethylene resin, a chlorinated polypropylene resin, a carboxyvinyl polymer, a ketone resin, an amorphous copolyester resin, a norbornene resin, a fluorine plastic, a polytetrafluoroethylene resin, a fluorinated ethylene polypropylene resin, a PFA, a polychlorofluoroethylene resin, an ethylene tetrafluoroethylene copolymer, a polyvinylidene fluoride resin, a polyvinyl fluoride resin, a polyarylate resin, a thermoplastic polyimide resin, a polyvinylidene chloride resin, a polyvinyl chloride resin, a polyvinyl acetate resin, a polysulfone resin, a polyparamethylstyrene resin, a polyallylamine resin, a polyvinyl ether resin, a polyphenylene ether resin, a modified polyphenylene ether resin, a polyphenylene sulfide (pps) resin, a polymethylpentene resin, an oligoester acrylate, a xylene resin, a maleic acid resin, a polyhydroxybutyrate resin, a polysulfone resin, a polylactic acid resin, a polyglutamic acid resin, a polycaprolactone resin, a polyether sulfone resin, a polyacrylonitrile resin, and a styrene-acrylonitrile copolymer resin.

In the present embodiment, the thermoplastic resin (A) preferably contains an amorphous thermoplastic resin. For example, in a case of using: a blend (alloy) of an amorphous thermoplastic resin (A₁) with another kind of a thermoplastic resin (A₂) different from the amorphous thermoplastic resin (A₁); a blend (alloy) of the amorphous thermoplastic resin (A₁) and a crystalline thermoplastic resin (A₃); and the like, the effect according to the present embodiment can be obtained more effectively.

Here, the amorphous thermoplastic resin (A₁ or A₂) refers to a thermoplastic resin that cannot take a crystalline state or has extremely low crystallinity even when the resin crystallizes. More specifically, the amorphous thermoplastic resin is also called an amorphous polymer, and is a solid state (amorphous form) in which atoms or molecules are irregularly assembled without forming a three-dimensionally regular spatial lattice.

The amorphous state has a glass state and a rubber state, and there is a thermoplastic resin having a characteristic of showing a hard glass-like shape at equal to or lower than a glass transition point (Tg) and a soft rubber-like shape at equal to or higher than the Tg. Among the thermoplastic resin group, for example, the polystyrene, the ABS, the polycarbonate resin, the modified polyphenylene ether, the poly ether, sulfone, and polyether imide correspond thereto. Such an amorphous thermoplastic resin is a resin attracting attention in many industrial fields because the resin exhibits high strength and high heat resistance. However, in metal-resin integrated integrating in which a fine uneven shape is formed on the metal surface and the resin is physically integrated to the metal by an anchor effect, due to the high melt viscosity and low fluidity thereof, it was difficult for the resin to sufficiently penetrate into the fine uneven shape, and it was necessary to rely on a special molding method such as heat and cool molding.

According to the present embodiment, even in a case where such a high melt viscosity type resin or resin composition is used, it is possible to obtain the metal/resin composite structure 106 having sufficient integrating strength without using a special molding method such as a heat and cool molding method. Also, in the method for manufacturing the metal/resin composite structure 106 according to the present embodiment, if a special injection molding method such as the heat and cool molding is combined, the integrating strength can be further dramatically improved.

As a constituent component of the resin composition (P), the above-mentioned amorphous thermoplastic resin may be used alone or two or more kinds thereof may be used in combination as appropriate, or the amorphous thermoplastic resin and the crystalline thermoplastic resin may be used in combination as appropriate. In a case where the resin composition (P) contains an amorphous thermoplastic resin, the content of the amorphous thermoplastic resin is equal to or more than 10% by mass, preferably equal to or more than 20% by mass, more preferably equal to or more than 30% by mass, with respect to the entire resin composition (P).

Among the amorphous thermoplastic resins, the modified polyphenylene ether (hereinafter, may be abbreviated as m-PPE) having excellent dimensional stability, relatively small molding shrinkage, and low water absorption or a resin composition containing the m-PPE is preferable.

As the m-PPE according to the present embodiment, it is preferable that at least one selected from polystyrene, high impact polystyrene, syndiotactic polystyrene, and rubber-reinforced syndiotactic polystyrene is added in a range of equal to or less than 500 parts by weight, and preferably in a range of equal to or less than 200 parts by weight, with respect to 100 parts by weight of the PPE. As the PPE according to the present embodiment, poly(2,6-dimethyl-1,4-phenylene ether), a copolymer of 2,6-dimethylphenol and 2,3,6-trimethyl phenol, or the like is preferably used from the viewpoint of versatility and availability.

### (Filler (B))

The resin composition (P) may further contain the filler (B), from the viewpoint of adjusting the difference in linear expansion coefficient between the metal member 103 and the resin member 105 and improving the mechanical strength of the resin member 105.

As the filler (B), for example, one or more kinds can be selected from the group consisting of a glass fiber, a carbon fiber, a carbon particle, clay, talc, silica, mineral, and a cellulose fiber. Among these, one or more selected from the glass fiber, the carbon fiber, the talc, and the mineral are preferable.

A shape of the filler (B) is not particularly limited, and may be any shape such as a fibrous shape, a particle shape, and a plate shape. The filler (B) preferably contains 5% to 100% of the filler having a maximum length in a range of equal to or more than 10 nm and equal to or less than 600 µm in a few fractions. The maximum length is more preferably equal to or more than 30 nm and equal to or less than 550 µm, and still more preferably equal to or more than 50 nm and equal to or less than 500 µm. Also, the fraction of the filler (B) in the maximum length range is preferably 10% to 100%, and more preferably 20% to 100%.

When the maximum length of the filler (B) is within the range, the filler (B) can easily move in the thermoplastic resin (A) melted during molding of the resin composition (P). Therefore, when manufacturing the metal/resin composite structure 106, which will be described later, the filler (B) can be present in the vicinity of the surface of the metal member 103 at a certain ratio. Therefore, as described above, the resin that interacts with the filler (B) enters the inorganic particle layer 107 over the region of forming the fine uneven shape 104 on the surface of the metal member 103. Accordingly, a stronger integrating strength can be obtained.

In a case where the resin composition (P) contains the filler (B), the content thereof is preferably equal to or more than 1 part by mass and equal to or less than 100 parts by mass, more preferably equal to or more than 5 parts by mass and equal to or less than 90 parts by mass, and particularly preferably equal to or more than 10 parts by mass and equal to or less than 80 parts by mass, with respect to 100 parts by mass of the thermoplastic resin (A).

### (Other compounding agents)

The resin composition (P) may contain other compounding agents for the purpose of imparting individual functions. Examples of such a compounding agent include a heat stabilizer, an antioxidant, a pigment, a weather resistant agent, a flame retardant, a plasticizer, a dispersant, a lubricant, a mold release agent, and an antistatic agent.

In a case where the resin composition (P) contains other compounding agents, a content thereof is preferably 0.0001 to 5 parts by mass, and more preferably 0.001 to 3 parts by mass, with respect to 100 parts by mass of the thermoplastic resin (A) .

### (Method for preparing resin composition (P))

A method for preparing the resin composition (P) is not particularly limited, and the resin composition (P) can be prepared by a generally known method. For example, the following method can be mentioned. First, the thermoplastic resin (A), the filler (B) as necessary, and other compounding agents as necessary are mixed or melt-mixed using a mixing device such as a Banbury mixer, a single-screw extruder, a twin-screw extruder, and a high-speed twin-screw extruder to obtain the resin composition (P).

### <Method for manufacturing metal/resin composite structure>

The metal/resin composite structure 106 according to the present embodiment can be manufactured, for example, by sequentially carrying out the following steps 1, 2, and 3. Hereinafter, each step will be described.
(Step 1) A step of preparing the metal member 103 having the fine uneven shape 104 on the surface 110.
(Step 2) A step of forming the inorganic particle layer 107 formed of inorganic particles to cover a part or an entirety of the fine uneven shape 104 of the metal member 103 (hereinafter, also referred to as an inorganic particle layer forming step).
(Step 3) A step of disposing the metal member 103 on which the inorganic particle layer 107 is formed in a mold and injecting the resin composition containing the thermoplastic resin into the mold to integrate a resin member 105 to the metal member 103 through the inorganic particle layer 107 (hereinafter, also referred to as an injection molding step).

Hereinafter, the description will be made specifically. Note that, since the step of preparing the metal member 103 having the fine uneven shape 104 on the surface 110 has been described above, the description thereof will not be repeated.

### <Step 2: Inorganic particle layer forming step>

A method for forming the inorganic particle layer 107 over a region of the metal member 103 where the fine uneven shape 104 has been formed is not particularly limited. The inorganic particle layer can be formed by applying an inorganic particle dispersion liquid onto a region where the fine uneven shape 104 has been formed. The inorganic particles typified by silica particles, tin oxide particles, nanodiamond particles, zirconia particles, niobium oxide particles, iron oxide particles, alumina particles, and carbon nanofibers are nanoparticles having an average particle size (primary particles) of preferably equal to or larger than 1 nm and equal to or smaller than 100 nm, more preferably equal to or larger than 1 nm and equal to or smaller than 70 nm, still more preferably equal to or larger than 1 nm and equal to or smaller than 50 nm, even more preferably equal to or larger than 1 nm and equal to or smaller than 30 nm, and particularly preferably larger than 1 nm and smaller than 20 nm, and may have a secondary particle structure in which several to several hundred primary particles are aggregated. Such inorganic fine particles can be prepared by a solid phase method, a liquid phase method, and a gas phase method, and the liquid phase method and the gas phase method (including a flame treatment) are preferable from the viewpoint of the ability to reduce the particle size. Note that, in examples to be described later, a liquid phase method using tetramethyl orthosilicate as a raw material is adopted.

Commercially available products can also be used as the inorganic particles. Examples of the inorganic particles can include as a carbon nanofiber dispersion, CNF 5% by mass ethanol dispersion manufactured by MD Nanotech Corporation (product name; MD CNF/ethanol), as a nanosilica dispersion, a dispersion manufactured by JAPAN NANO COAT CO., LTD. in which 4 parts by mass of single nanosilica particles of 2 to 9 nm, manufactured by JAPAN NANO COAT CO., LTD. are dispersed and mixed in 91 parts by mass of methanol and 5 parts by mass of water (product name; B-4), a dispersion manufactured by JAPAN NANO COAT CO., LTD. in which 3 parts by mass of single nanosilica particles of 2 to 9 nm and 0.1% by mass of tin oxide nanoparticles are dispersed and mixed in 89 parts by mass of methanol and 8 parts by mass of water (product name; PM-S), a dispersion manufactured by Nissan Chemical Industries, Ltd. in which silica fine particles with a particle size of 10 to 20 nm are dispersed in water (product name; SNOWTEX 30), a mixed liquid manufactured by Fuso Chemical Co., Ltd. of 20 parts by mass of nanosilica particles (product name; PL-1) of about 15 nm and 80 parts by mass of methanol, and as a diamond nanoparticle dispersion liquid, a water dispersion liquid manufactured by New Metals & Chemicals Corporation (product name; NanoAmando, average particle size: about 4 nm, solid content 5% by mass).Examples of a solvent in the dispersion liquid include water, methanol, and ethanol, and the methanol and the water are preferable from the viewpoint of the dispersibility of the inorganic particles in the dispersion liquid and a solvent distillation efficiency after applying.

A method for applying the inorganic particle dispersion liquid to the surface 110 of the metal member 103 is not particularly limited, and examples thereof include a method for immersing the metal member 103 in a dispersion liquid or a method for spray coating the dispersion liquid on the surface of the metal member 103. Specifically, spray coating is a method for performing application by spraying to a surface to be coated with a spray gun. In any of the application methods, the application can usually be performed at around room temperature. In addition, it is also a preferable example to perform coating using a bar coater, a spin coater, or the like.

A drying method after application is not particularly limited, and for example, a known method such as natural drying or forced heating drying can be used. In the present embodiment, in view of the shape of the metal member 103 that is preferably used, it is preferable to include a heating step including the drying step, from the viewpoint of allowing the inorganic particles to penetrate into the fine uneven shape 104 of the metal member 103.

### <Step 3: Injection molding step>

Specifically, the injection step is a step of molding the resin member 105 with an injection molding method, in which the metal member 103 completed up to Step 2 is inserted into a cavity portion of an injection mold and the resin composition (P) is injected into the mold to be in contact with the inorganic particle layer 107, to manufacture the metal/resin composite structure 106.

Specifically, first, the mold for injection molding is prepared, the mold is opened, and the metal member 103 completed up to Step 2 is installed in a part of the mold. Thereafter, the mold is closed, and the resin composition (P) is injected into the mold so that at least a part of the resin composition (P) is in contact with the inorganic particle layer 107 formed on the surface 110 of the metal member 103, and solidified. Thereafter, the metal/resin composite structure 106 can be obtained by opening the mold and releasing the mold.

In addition, in the injection molding step, a known injection foam molding or a known heat and cool molding in which the temperature of the mold is controlled to heat and cool in one cycle of the injection molding may be used in combination. As a condition for the heat and cool molding, it is desirable to heat the injection mold to a temperature of equal to or higher than 80°C and equal to or lower than 300°C, and after completion of the injection of the resin composition (P), to cool the injection mold. A preferred range of the temperature for heating the mold differs depending on the thermoplastic resin (A) forming the resin composition (P). If the thermoplastic resin is a crystalline resin having a melting point of lower than 200°C, the temperature is preferably equal to or higher than 80°C and equal to or lower than 200°C, and if the thermoplastic resin is a crystalline resin having a melting point of equal to or higher than 200°C, the temperature is preferably equal to or higher than 120°C and equal to or lower than 300°C. In the resin composition containing an amorphous resin, it is preferable to cool the mold to be equal to or higher than 20°C and equal to or lower than 180°C after the injection is completed at a temperature of equal to or higher than Tg (glass transition temperature) of the resin.

### <Applications of metal/resin composite structure>

The metal/resin composite structure 106 according to the present embodiment has high productivity and a high degree of freedom in shape control, and thus can be developed into various applications.

Furthermore, the metal/resin composite structure 106 according to the present embodiment exhibits high airtightness and watertightness, and is thus suitably used for applications according to these characteristics.

For example, structural parts for vehicles, vehicle-mounted products, housings for electronic devices, housings for home appliances, structural parts, mechanical parts, various automobile parts, parts for electronic devices, applications for household goods such as furniture and kitchen utensils, medical equipment, building material parts, and other structural parts and exterior parts can be mentioned.

More specifically, there is the following component designed so that the metal supports a part where the strength is insufficient with the resin alone. For example, in the case of vehicles, instrument panels, a console box, doorknobs, door trims, shift levers, pedals, a glove box, a bumper, a hood, a fender, a trunk, a door, a roof, pillars, seats, radiators, oil pans, and steering wheels; in a case of electronic devices, ECU box, LIB battery module, electrical parts, personal computer, mobile phone, smartphone, digital camera, tablet PC, portable music player, portable game machine, charger, battery and other electronic information devices, and robot parts; and in the case of home appliances, refrigerator, washing machine, vacuum cleaner, microwave oven, air conditioner, lighting equipment, electric water heater, TV, clock, ventilation fan, projector, speaker can be mentioned. In addition, as the building materials and furniture, glass window frames, handrails, curtain rails, chests of drawers, drawers, closets, bookcases, desks, and chairs can be mentioned. Also, as the precision electronic components, connectors, relays, and gears can be mentioned. In addition, as the transport container, a transport container, a suitcase, and a trunk can be mentioned.

In addition, the high thermal conductivity of the metal member 103 and the heat insulating properties of the resin member 105 can be combined to be used as a component application used in equipment for optimally designing heat management, for example, as a cooling device for various heating elements. Specifically, the cooling jacket of a server unit and a cooling jacket of a LIB battery module can be exemplified. Hereinafter, as an example of the applications of the metal/resin composite structure 106 according to the present embodiment, the cooling device will be described with reference to the drawings.

### <Cooling device>

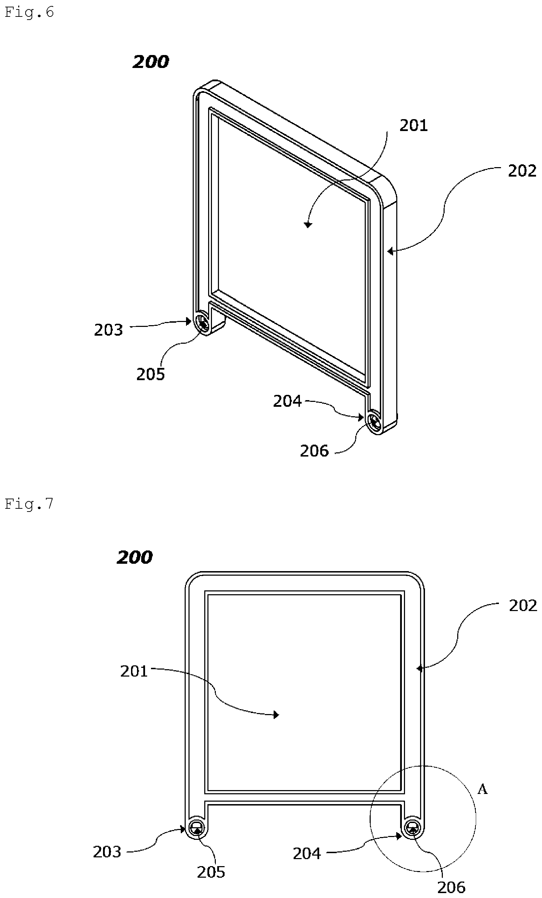

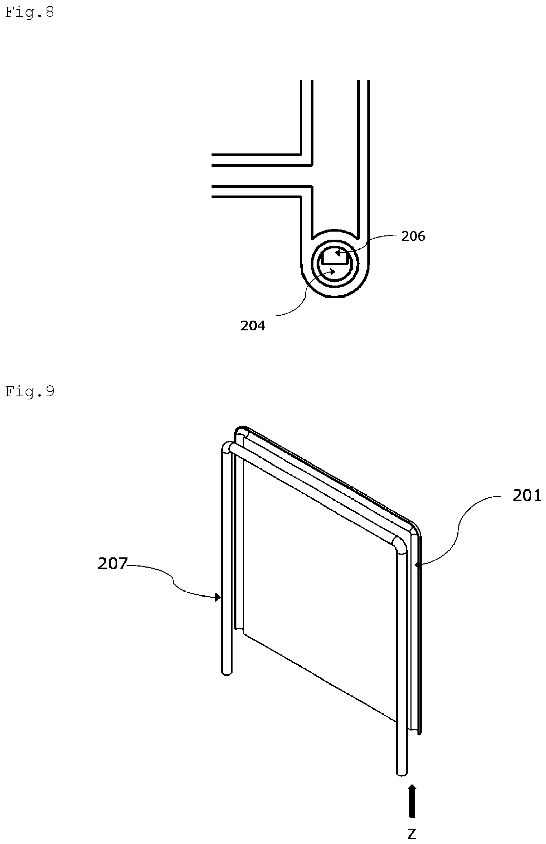

One aspect of the cooling device according to the present embodiment is shown in Fig. 6 (perspective view), Fig. 7 (front view), and Fig. 8 (enlarged view around a manifold element).

A cooling device 200 according to the present embodiment includes a cooling fin 201 which is formed of a metal and can contact (preferably face-to-face contact) a heating element (for example, battery cell, and not shown in the drawings), a frame member 202 which is made of a resin composition containing a thermoplastic resin and is provided in a part of the cooling fin 201, and a refrigerant conduit 207 which is formed of a metal and is integrated to the frame member 202.

Here, the cooling fin 201 preferably has a size that allows face-to-face contact with the heating element, and preferably has a rectangular and flat shape.

The frame member 202 is preferably formed to surround a peripheral edge part of the cooling fin 201. Moreover, the refrigerant conduit 207 is preferably located at the peripheral edge part of the cooling fin 201, and for example, has a refrigerant inflow port 205 and a refrigerant discharge port 206 that penetrate at least one side of the frame member 202, preferably projecting orthogonally through at least one side.

Therefore, the refrigerant inflow port 205 and the refrigerant discharge port 206 are connected to a cooling manifold element 203 (refrigerant inlet side) and a cooling manifold element 204 (refrigerant discharge port side) integrally formed with the frame member 202. Here, each cooling manifold element has a hollow structure that penetrates orthogonally from one surface of the frame member to the other surface side.

For example, the frame member 202 has a bank portion formed over the peripheral edge parts of both sides of the cooling fin 201 to have the same thickness d in the front and back direction with respect to the surface of the cooling fin 201. The thickness d of the bank portion is designed to be equal to, for example, 1/2 of the thickness of the heating element, or slightly narrower than 1/2 of the thickness.

In the plurality of cooling devices 200, the banks are closely arranged so that the surfaces of the cooling fins 201 are in parallel with each other to form, for example, a battery module. For example, in the case of the close arrangement, a heating element such as a battery cell is disposed to be included in both cooling fins 201 in a space portion formed between one cooling device 200 and an adjacent cooling device 200. Also, at the same time, the cooling manifold element 203 and the adjacent cooling manifold element 203 are connected to each other, and the cooling manifold element 204 and the adjacent cooling manifold element 204 are connected to each other to form a cooling manifold for refrigerant inflow and a cooling manifold for refrigerant discharge.

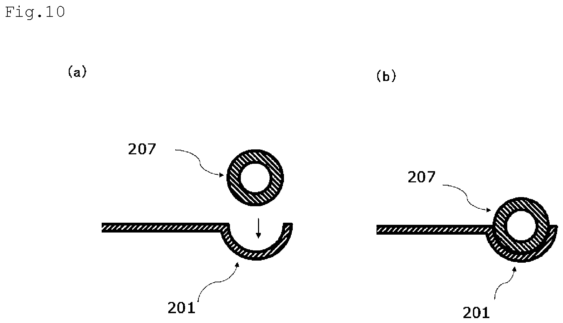

For example, the cooling fin 201 having a shape in which at least three ends of a rectangular flat metal plate is curved is closely fitted with the refrigerant conduit 207 having an outer diameter substantially equal to a radius of curvature of the curved surface, and then the resin composition containing the thermoplastic resin is injection molded to cover the cooling fin 201 and the refrigerant conduit 207. Accordingly, the frame member 202 is integrally molded with the cooling fin 201 and the refrigerant conduit 207 (see Fig. 10, Fig. 10(a) represents an image view before close fitting, and Fig. 10(b) represents an image view after close fitting).

Since the refrigerant inflow port 205 and the refrigerant discharge port 206 of the refrigerant conduit 207 are connected to communicate with, for example, the cooling manifold elements 203 and 204, respectively, the refrigerant passing through the cooling manifold element 203 on one side circulates in the refrigerant conduit 207 in a process of being discharged to the cooling manifold element 204 on the other side through the refrigerant inflow port 205 and the refrigerant discharge port 206. As described above, the refrigerant conduit 207 and the curved end portion provided on the cooling fin 201 are closely fitted. Therefore, cold heat of the refrigerant conduit 207 is transmitted to the entire cooling fin to exhibit the cooling function.

The shape examples of the refrigerant conduit 207 shown in Figs. 6, 7, and 9 represent an inverted U shape having right-angled bent portions at two positions, but the shape of the refrigerant conduit 207 according to the present embodiment is not limited to any shape, and may be, for example, a shape bent at 3 or more positions. In general, the smaller the number of bent portions, the lower the cost of manufacturing the battery module and the like. Also, the pressure reduction of the refrigerant can be suppressed. As a result, the cooling efficiency can be improved, which is preferable.

The resin composition forming the frame member 202 is integrated to the outer peripheral surface of the refrigerant conduit 207 through the inorganic particle layer, and the outer peripheral surface of the refrigerant conduit 207 has a fine uneven shape at least on the surface of the integrating part with the frame member 202, and the inorganic particle layer is formed to cover a part or an entirety of the fine uneven shape of the refrigerant conduit 207.

Here, the refrigerant conduit 207 penetrates one side of the frame member 202, preferably one side on which the cooling manifold elements 203 and 204 are formed. It is preferable that the refrigerant conduit 207 preferably orthogonally penetrates to form the refrigerant inlet 205 and the refrigerant discharge port 206. Also, it is preferable that the outer peripheral surface of the refrigerant conduit 207 and the frame member 202 are integrated at least at the penetrating portion of the frame member 202.

As for the configuration of the composite of the refrigerant conduit 207 and the frame member 202 forming the cooling device 200 according to the present embodiment, an embodying mode described above of the metal/resin composite structure 106 according to the present embodiment is directly applied without any limitation.

That is, the inorganic particle layer forming the cooling device 200 according to the present embodiment contains silica particles in a preferred embodiment.

The average thickness of the inorganic particle layer is equal to or larger than 1 nm and equal to or smaller than 400 nm, and preferably equal to or larger than 2 nm and equal to or smaller than 100 nm.

Further, the average particle size of the inorganic particles is equal to or larger than 1 nm and equal to or smaller than 100 nm.

Also, the average value of height differences between projection portions and recessed portions of the fine uneven shape is equal to or more than 10 nm and equal to or less than 200 µm.

In the cooling device 200 according to the present embodiment, the thermoplastic resin may contain an amorphous thermoplastic resin.

In the cooling device 200 according to the present embodiment, it is preferable that the refrigerant conduit 207 made of metal contains one or more metals selected from an iron-based metal, an aluminum-based metal, a magnesium-based metal, a copper-based metal, and a titanium-based metal.

Furthermore, a method for manufacturing the cooling device 200 according to the present embodiment includes: for example, a step of preparing a metal conduit having a fine uneven shape on a surface; a step of forming an inorganic particle layer formed of inorganic particles to cover a part or an entirety of the fine uneven shape of the metal conduit, preferably a step of forming the inorganic particle layer using an inorganic particle dispersion liquid; and a step of disposing the metal conduit on which the inorganic particle layer is formed in a mold and injecting a resin composition containing a thermoplastic resin into the mold to integrate a frame member to the metal conduit through the inorganic particle layer.

The applications of the metal/resin composite structure 106 according to the present embodiment have been described above, but these are examples of the applications of the present invention and can also be used for various applications other than the above.

Although the embodiments of the present invention have been described above, these are examples of the present invention, and various configurations other than the above can be adopted.

### [Examples]

Hereinafter, the present embodiment will be described in detail with reference to Examples and Comparative Examples. Note that, the present embodiment is not limited to the description of these examples.

### [Example 1]

### (Surface roughening step)

An aluminum alloy plate (45 mm × 18 mm × 2 mm) having alloy No. 5052 specified in JIS H4000 was degreased. Next, the obtained aluminum alloy plate was immersed for 80 seconds in an aqueous solution (30°C) in which 8.2% by mass of sulfuric acid, 7.8% by mass of ferric chloride, and 0.4% by mass of cupric chloride were dissolved, and etched by rocking. Next, ultrasonic cleaning (in water, for 1 minute) was performed with running water, and the surface-treated aluminum alloy plate was obtained by drying.

As the surface roughness of the obtained surface-treated aluminum alloy plate, in surface roughness measured in accordance with JIS B0601: 2001 (corresponding ISO4287) using a surface roughness measuring device apparatus "SURFCOM 1400D (manufactured by TOKYO SEIMITSU CO., LTD.)", an average value of ten-point average roughness (Rzjis) and an average value of an average length (RSm) of the roughness curve element were determined, respectively. As a result, the average value of Rzjis was 18 µm. The average value of the average length (RSm) of the roughness curve elements was 90 µm. Note that, the Rzjis average value and the RSm average value are average values of 6 points at different measurement locations.

Note that, the surface roughness measurement conditions are as follows.
- Radius of stylus tip: 5 µm
- Standard length: 0.8 mm
- Evaluation length: 4 mm
- Measurement velocity: 0.06 mm/sec

### (Silica particle layer forming step)

A hydrolysis reaction of tetramethyl orthosilicate and a treatment with an aqueous solution of tetramethylammonium hydroxide were carried out in accordance with a method described in Example 1 of Japanese Unexamined Patent Publication No. 2013-82584 to prepare Water/MeOH (weight ratio 1/9) dispersion liquid of the silica nanoparticles. An average primary particle size of the obtained silica nanoparticles was 20 nm.

The surface-roughened aluminum alloy plate obtained in the surface roughening step is immersed for 5 minutes at a room temperature in a dispersion in which the silica nanoparticle dispersion liquid is diluted 6-fold with methanol, and then dried at 100°C for 20 minutes. As a result, a surface-treated aluminum alloy plate in which a silica nanoparticle layer was formed to cover the fine uneven shape was produced.

### (Injection molding step)

The surface-treated aluminum alloy plate on which the silica nanoparticle layer has been formed, which was obtained through the surface roughening step and the silica particle layer forming step was installed in a small dumbbell metal insert mold mounted on an injection molding machine J55-AD manufactured by Japan Steel Works, Ltd. Next, as the resin composition (P), a modified polyphenylene ether (NORYL CN1134; containing 20% by mass of glass fiber) manufactured by SABIC Innovative Plastics was injection molded in the mold under conditions of a cylinder temperature (resin temperature) of 280°C, a mold temperature of 100°C, primary injection pressure of 125 to 135 MPa, and pressure keeping at 110 MPa, and the resin member was injected and integrated to the surface-treated aluminum alloy plate on which the silica nanoparticle layer has been formed to obtain the metal/resin composite structure.

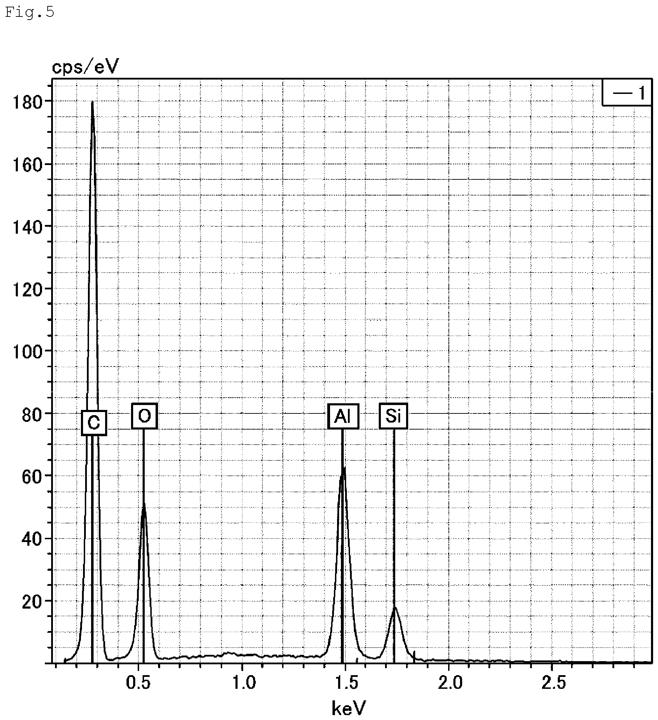

A sectional SEM image of the obtained metal/resin composite structure is shown in Fig. 3. According to this, it was computed that an average thickness of the silica nanoparticle layer was 60 nm. In addition, a sectional SEM/EDS image (element mapping image) (Fig. 4) and an EDS spectrum (Fig. 5) of the section of the integrating part of the same structure are shown. Since it is confirmed that silicon atoms and oxygen atoms are unevenly distributed to follow the fine uneven shape, it was found that the silica nanoparticle layer was formed to cover the fine uneven shape formed on the surface of the aluminum alloy plate.

The tensile shear strength of the integrating part of the metal/resin composite structure obtained in the injection molding step was determined. Specifically, a tensile tester "model 1323" (manufactured by Aiko Engineering Co., Ltd.) was used, a dedicated jig was attached to the tensile tester, and the integrating strength was measured under the conditions of a chuck distance of 60 mm and a tensile velocity of 10 mm/min at a room temperature (23°C). The integrating strength (MPa) was obtained by dividing the breaking load (N) by the area of the integrating portion between the aluminum alloy plate and the resin member. The integrating strength was 20 MPa. The fracture surface was a mixture of interfacial fracture and base metal fracture.

### [Example 2]

Except for using a mold capable of heat and cool molding (Y-HeaT device manufactured by Yamashita Electric Co., Ltd.) as a mold in the injection molding step and changing the mold temperature from 100°C to 120°C to perform heat and cool molding, a metal/resin composite structure was produced in the same manner as in Example 1, and the integrating strength was evaluated. The integrating strength was 26 MPa. The fracture surface was a mixture of interfacial fracture and base metal fracture.

### [Example 3]

Except for using a mold capable of heat and cool molding (Y-HeaT device manufactured by Yamashita Electric Co., Ltd.) as a mold in the injection molding step and changing the mold temperature from 100°C to 140°C to perform heat and cool molding, a metal/resin composite structure was produced in the same manner as in Example 1, and the integrating strength was evaluated. The integrating strength was 32 MPa. The fracture surface was the base metal fracture.

### [Comparative Example 1]

Except that the silica nanoparticle layer was not formed, a metal/resin composite structure was prepared in the same manner as in Example 2, and the integrating strength was evaluated. The integrating strength was 16 MPa. The fracture surface was a mixture of interfacial fracture and base metal fracture.

### [Example 4]

### (Surface roughening step)

An aluminum alloy plate (45 mm × 18 mm × 2 mm) having alloy No. 5052 specified in JIS H4000 was degreased. Next, the obtained aluminum alloy plate was immersed in a treatment tank 1 filled with an alkaline etching agent (30°C) containing 15% by mass of sodium hydroxide and 3% by mass of zinc oxide for 3 minutes (in the following description, may be abbreviated as an "alkaline etching agent treatment"), and was then immersed in 30% by mass nitric acid (30°C) for 1 minute. The alkaline etching agent treatment was repeated once more. Next, the obtained aluminum alloy plate was immersed in a treatment tank 2, which is filled with an acid-based etching aqueous solution containing 3.9% by mass of ferric chloride, 0.2% by mass of cupric chloride, and 4.1% by mass of sulfuric acid, at 30°C for 5 minutes and oscillated (in the following description, may be abbreviated as an "acid-based etching agent treatment"). Next, ultrasonic cleaning (in water, for 1 minute) was performed with running water, and then, the surface-treated aluminum alloy plate was obtained by drying.

As the surface roughness of the obtained surface-treated aluminum alloy plate, in surface roughness measured in accordance with JIS B0601: 2001 (corresponding ISO4287) using a surface roughness measuring device apparatus "SURFCOM 1400D (manufactured by TOKYO SEIMITSU CO., LTD.)", an average value of ten-point average roughness (Rzjis) and an average value of an average length (RSm) of the roughness curve element were measured, respectively. As a result, the Rzjis average value was 19 µm and the RSm average value was 104 µm. Note that, the Rzjis average value and the RSm average value are averages of measured values at 6 points at different measurement locations.

### (Silica particle layer forming step)

The surface-roughened aluminum alloy plate obtained in the surface roughening step is immersed for 5 minutes at a room temperature in a dispersion obtained by diluting silica binder PM-S manufactured by JAPAN NANO COAT CO., LTD (Composition: 89% by mass of methanol, 8% by mass of water, 0.1% by mass of tin oxide, and 2.9% by mass of silicon dioxide) 6-fold with 90% by mass of hydrous methanol, and then dried at 100°C for 20 minutes. As a result, a surface-treated aluminum alloy plate in which a silica nanoparticle layer was formed to cover the fine uneven shape was produced.

### (Injection molding step)

A small dumbbell metal insert mold was mounted on a J85AD110H manufactured by Japan Steel Works, Ltd., and the surface-treated aluminum alloy plate obtained by the above method (the surface-treated alloy plate) was installed in the mold. Next, as the thermoplastic resin composition (P), a polybutylene terephthalate (PBT) resin (DURANEX (registered trademark) 930HL) manufactured by Polyplastics Co., Ltd. was injection molded in the mold under conditions of a cylinder temperature of 270°C, a mold temperature of 100°C, injection velocity of 25 mm/sec, pressure keeping at 80 MPa, and pressure keeping time for 10 seconds and the resin member was injected and integrated to the surface-treated aluminum alloy plate on which the silica nanoparticle layer has been formed to obtain the metal/resin composite structure. The section SEM of the metal/resin composite structure was observed in the same manner as in Example 1, and the average thickness of the silica nanoparticle layer was measured and found to be 70 nm.

The integrating strength of the obtained metal/resin composite structure was 34 MPa. The fracture surface was a mixture of interfacial fracture and base metal fracture.

### [Example 5]

Except that in the injection molding step, polyamide PA66 (trade name: 70G43L™ NC010, glass fiber content: 43% by mass) manufactured by DuPont was used instead of the polybutylene terephthalate (PBT) resin manufactured by Polyplastics Co., Ltd., the cylinder temperature was changed to 300°C, and the mold temperature was changed to 160°C, the experiment was carried out in the same manner as in Example 4. As a result, the integrating strength was 36 MPa. In addition, the fracture surface was interfacial fracture.

### [Example 6]

Except that, in the surface roughening step, the alloy plate of alloy No. 6063 was used instead of the aluminum alloy plate of alloy No. 5052 specified in JIS H4000, the experiment was carried out in the same manner as in Example 4. The ten-point average roughness (Rzjis) and the average length (RSm) of the roughness curve elements measured for the obtained surface-treated aluminum alloy plate were 22 µm and 120 µm, respectively. The integrating strength of the obtained metal/resin composite structure was 35 MPa. The fracture surface was a mixture of interfacial fracture and base metal fracture.

### [Example 7]

Except that, in the surface roughening step, an aluminum alloy plate of alloy No. 3003 was used instead of the aluminum alloy plate of alloy No. 5052 specified in JIS H4000, the experiment was carried out in the same manner as in Example 4. The ten-point average roughness (Rzjis) and the average length (RSm) of the roughness curve elements measured for the obtained surface-treated aluminum alloy plate were 25 µm and 122 µm, respectively. The section SEM of the obtained metal/resin composite structure was observed in the same manner as in Example 4, and the average thickness of the silica nanoparticle layer was measured and found to be 60 nm. In addition, the integrating strength of the metal/resin composite structure was 36 MPa. The fracture surface was a mixture of interfacial fracture and base metal fracture.

### [Comparative example 2]

Except that the silica nanoparticle layer was not formed, a metal/resin composite structure was prepared in the same manner as in Example 4, and the integrating strength was evaluated. The integrating strength was 28 MPa. The fracture surface was a mixture of interfacial fracture and base metal fracture.

### [Comparative Example 3]

Except that the silica nanoparticle layer was not formed, a metal/resin composite structure was prepared in the same manner as in Example 5, and the integrating strength was evaluated. The integrating strength was 26 MPa. The fracture surface was interfacial fracture.

## Claims

1. A metal/resin composite structure comprising:
a metal member;
a resin member which is integrated to the metal member and is formed of a resin composition containing a thermoplastic resin; and
an inorganic particle layer which is provided between the metal member and the resin member and is formed of inorganic particles,
wherein the metal member has a fine uneven shape at least on a surface of an integrating part with the resin member,
the inorganic particle layer is formed to cover a part or an entirety of the fine uneven shape of the metal member, and
the metal member and the resin member are integrated to each other through the inorganic particle layer.

2. The metal/resin composite structure according to claim 1,
wherein the inorganic particle layer contains silica particles.

3. The metal/resin composite structure according to claim 1 or 2,
wherein an average thickness of the inorganic particle layer is equal to or larger than 1 nm and equal to or smaller than 400 nm.

4. The metal/resin composite structure according to claim 1 or 2,
wherein an average thickness of the inorganic particle layer is equal to or larger than 2 nm and equal to or smaller than 100 nm.

5. The metal/resin composite structure according to any one of claims 1 to 4,
wherein an average particle size of the inorganic particles is equal to or larger than 1 nm and equal to or smaller than 100 nm.

6. The metal/resin composite structure according to any one of claims 1 to 5,
wherein an average value of height differences between projection portions and recessed portions of the fine uneven shape is equal to or more than 10 nm and equal to or less than 200 pm.

7. The metal/resin composite structure according to any one of claims 1 to 6,
wherein the thermoplastic resin contains an amorphous thermoplastic resin.

8. The metal/resin composite structure according to any one of claims 1 to 7,
wherein the metal member contains one or more metals selected from an iron-based metal, an aluminum-based metal, a magnesium-based metal, a copper-based metal, and a titanium-based metal.

9. A method for manufacturing the metal/resin composite structure according to any one of claims 1 to 8, the method comprising:
a step of preparing a metal member having a fine uneven shape on a surface;
a step of forming an inorganic particle layer formed of inorganic particles to cover a part or an entirety of the fine uneven shape of the metal member; and
a step of disposing the metal member on which the inorganic particle layer is formed in a mold and injecting a resin composition containing a thermoplastic resin into the mold to integrate a resin member to the metal member through the inorganic particle layer.

10. The method for manufacturing the metal/resin composite structure, according to claim 9,
wherein the inorganic particle layer is formed by using an inorganic particle dispersion liquid.

11. A cooling device comprising:
a cooling fin which is formed of a metal and can contact a heating element;
a frame member which is made of a resin composition containing a thermoplastic resin and is provided in a part of the cooling fin; and
a refrigerant conduit which is formed of a metal and is integrated to the frame member,
wherein the resin composition forming the frame member is integrated to an outer peripheral surface of the refrigerant conduit through an inorganic particle layer,
the outer peripheral surface of the refrigerant conduit has a fine uneven shape at least on a surface of an integrating part with the frame member, and
the inorganic particle layer is formed to cover a part or an entirety of the fine uneven shape of the refrigerant conduit.

12. The cooling device according to claim 11,
wherein the inorganic particle layer contains silica particles.

13. The cooling device according to claim 11 or 12,
wherein the heating element includes a battery cell.
